# EUROPÄISCHE PATENTSCHRIFT

(11) **EP 2 634 015 B1**
(45) Veröffentlichungstag und Bekanntmachung des Hinweises auf die Patenterteilung: **10.05.2017**
(21) Anmeldenummer: 12157877.7
(22) Anmeldetag: 02.03.2012
(51) Int. Cl.: B60C 11/12

(54) **Laufstreifenprofil eines Fahrzeugreifens**
Tread profile of a vehicle tyre
Profil de bande de roulement d'un pneu de véhicule

(43) Veröffentlichungstag der Anmeldung: 04.09.2013
(73) Patentinhaber: Continental Reifen Deutschland GmbH, 30165 Hannover (DE)
(72) Erfinder: Pokutta-Paskaleva, Anastassia, 30161 Hannover (DE); Hoffmann, Jens, 40670 Meerbusch (DE)
(74) Vertreter: Fornefett, Iris

(56) Entgegenhaltungen:
- EP-A1- 2 311 655
- EP-A2- 1 195 271
- WO-A1-2009/077808
- FR-A1- 2 921 586
- JP-A- 11 151 914
- JP-A- 2000 025 419

## Beschreibung

Die Erfindung betrifft ein Laufstreifenprofil eines Fahrzeugreifens, welches ein über den Umfang des Laufstreifens umlaufendes Profilband mit Feineinschnitten aufweist, welche das Profilband in Profilbandabschnitte unterteilt und wobei der Feineinschnitt - in Aufsicht - eine etwa Ω-förmige Geometrie aus zwei in etwa in axialer Richtung angeordneten, mit einem Abstand a voneinander beabstandeten axialen Abschnitten und einer zwischen diesen Abschnitten angeordneten, in etwa in Umfangsrichtung ausgerichteten mittigen Vorwölbung mit einer in axialer Richtung gemessenen maximalen Ausdehnung b aufweist, wobei die Vorwölbung in eine korrespondierende Ausnehmung des angrenzenden Profilbandabschnittes eingreift, wobei a < b ist, so dass Hinterschneidungen gebildet sind, durch welche diese zwei Profilbandabschnitte in Umfangsrichtung miteinander gekoppelt sind und wobei der Feineinschnitt ab einer Resttiefe des Feineinschnittes von 3mm bis 0,4 x der Feineinschnitttiefe eine veränderte Geometrie aufweist, indem die Hinterschneidungen ausbildende Vorwölbung nur bis zu dieser Resttiefe ausgebildet ist.

Feineinschnitte dienen beispielsweise bei Nutzfahrzeugreifen dazu, bei nasser Fahrbahn den Wasserfilm zu zertrennen, um bessere Nasseigenschaften dieses Laufstreifens zu erhalten.

Ein Laufstreifenprofil gemäß dem Oberbegriff ist sowohl aus der FR 2 921 586 A1 als auch aus der JP 11 151914 A bekannt.

Aus der GB 742,821 A ist ein Laufstreifenprofil offenbart, welches aus über den Umfang umlaufenden Profilbändern besteht. Jedes Profilband ist seitlich durch je eine Umfangsrille begrenzt. Die Profilbänder weisen Ω-förmige Feineinschnitte auf, die in axialer Richtung das Profilband vollständig durchlaufen und die sich von der Laufstreifenperipherie nach radial innen erstrecken. Eine derartige Ausbildung der Feineinschnitte bewirkt, dass die Profilbandabschnitte in Umfangsrichtung miteinander gekoppelt bzw. verschränkt sind, so dass sogenannte "interlocking" -Effekte erzielt sind. Zudem ist eine gute Nassperformance auf hoch-µ-Straßenoberflächen erhaltbar. Laufstreifenprofile mit Ωförmigen Feineinschnitten sind ebenfalls aus der WO 2009/077808 A1 und aus der EP 1 195 271 A2 bekannt.

Diese Verschränkung ist insbesondere im Neuzustand des Laufstreifenprofils von Vorteil, da die Profiltiefe hoch ist und eine hohe Beweglichkeit der Profilbandabschnitte gegeben ist. Die Verschränkung führt zu einer vorteilhaften Versteifung des Profilbandes bei Umfangskräften.

Im angefahrenen Zustand des Laufstreifenprofils sind die Profilbänder durch die geringere verbleibende Profiltiefe von sich aus bereits steifer als im Neuzustand. Eine weitere Versteifung durch Verschränkung ist dann unvorteilhaft.

Es ist die Aufgabe der Erfindung, ein Laufstreifenprofil eines Fahrzeugreifens zur Verfügung zu stellen, dass über seine Lebensdauer ein gutes Handling als auch eine gute Nassperformance aufweist.

Gelöst wird die Aufgabe, indem- in Aufsicht - die Vorwölbung in Umfangsrichtung beabstandet von den axialen Abschnitten angeordnet ist und dass die Vorwölbung mit den mittigen Enden der axialen Abschnitte durch in etwa in Umfangsrichtung angeordnete Umfangsabschnitte miteinander verbunden ist.

Es ist erfindungsgemäß ein Laufstreifenprofil geschaffen, dass im Neuzustand-in Aufsicht auf einen Feineinschnitt- durch eine etwa Ω-förmige Geometrie "interlocking"-Effekte zwischen benachbarten Profilbandabschnitten in Umfangsrichtung bewirkt und eine gute Nassperformance auf hoch-µ-Oberflächen aufweist. Denn die etwa Ω-förmig Geometrie des Feineinschnittes erlaubt durch die entstehenden Hinterschneidungen eine Verschränkung der Profilbandabschnitte bei Umfangskräften, welche zu der vorteilhaften Versteifung des Profilbandes führt. Im Tiefenverlauf weist der Feineinschnitt eine vom Neuzustand abweichende Geometrie auf. Über den Tiefenverlauf wird die bei Umfangskräften verschränkend wirkende Geometrie des Feineinschnittes abrupt durch Änderung der Feineinschnittgeometrie verringert bzw. aufgelöst und ist derart an die höhere Steifigkeit des weiter angefahrenen Laufstreifenprofils angepasst. Erfindungsgemäß ergibt sich ein verbundenes System aus Feineinschnitten, die gemeinsam Griffkanten ausbilden, gleichzeitig aber sich gegeneinander verschränken.

Es ist ein Laufstreifenprofil mit einem sogenannten "3D-Feineinschnitt" geschaffen, das über dessen Lebensdauer ein gutes Handling als auch eine gute Nassperformance aufweist.

"Axiale Richtung" meint die Richtung entlang der Reifenachse.
"Umfangsrichtung" meint die Richtung entlang des Reifenabrollens.

"Radiale Richtung" meint die Richtung vom Reifenmittelpunkt zum Laufstreifen.
"Feineinschnittgrund" meint Linie eines Feineinschnitts der dem Reifenmittelpunkt am nächsten ist.
"Breite des Feineinschnittes" meint die minimale Ausdehnung eines Feineinschnittes in Umfangsrichtung.
"Profiltiefe" oder "Feineinschnitttiefe" meint die maximale Differenz in radialer Richtung zwischen Elementen eines Profils bzw. eines Feineinschnittes.

Die zwei - in Aufsicht - als Gerade ausgebildeten axialen Abschnitte sind vorteilhafterweise auf einer gemeinsamen Geraden angeordnet.

Es ist vorteilhaft, wenn die Umfangsabschnitte -in Aufsicht- als Geraden ausgebildet sind. Die sich daraus ergebende Kante in Umfangsrichtung ist maximal formstabil.

Weiter auf S. 3, Z. 30 der ursprünglich eingereichten Unterlagen beginnend bis zum Grund der axialen Abschnitte verläuft und als Gerade ausgebildet ist. Dadurch ergibt sich ein kontinuierlicher Übergang in der Kantenausbildung.

In einer anderen Ausführung ist der Tiefenverlauf der Umfangsabschnitt derart ausgebildet, dass der Grund dieser Umfangsabschnitte von der Vorwölbung auf Höhe der Resttiefe beginnend bis zum Grund der axialen Abschnitte verläuft und konvex ausgebildet ist, wobei die konvexe Wölbung vorzugsweise nach radial außen weist. Dieser Verlauf reduziert die Spannungen im umgebenden Gummi bei von außen einwirkenden Kräften.

Ein derartiges Laufstreifenprofil ist in einem Fahrzeugreifen, vorzugsweise einen Nutzfahrzeugreifen einzusetzen.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine dreidimensionale Ansicht eines Laufstreifenprofils eines Fahrzeugreifens mit Feineinschnitten in den Profilbändern;
Fig. 2 eine dreidimensionale Darstellung eines Feineinschnittes des Laufstreifenprofils (Fig. 2a) und im Zustand ab Erreichen der Resttiefe mit veränderter Geometrie (Fig. 2b);
Fig. 3 eine dreidimensionale Darstellung eines weiteren Feineinschnittes;
Fig. 4 eine dreidimensionale Darstellung eines wiederum weiteren Feineinschnittes.

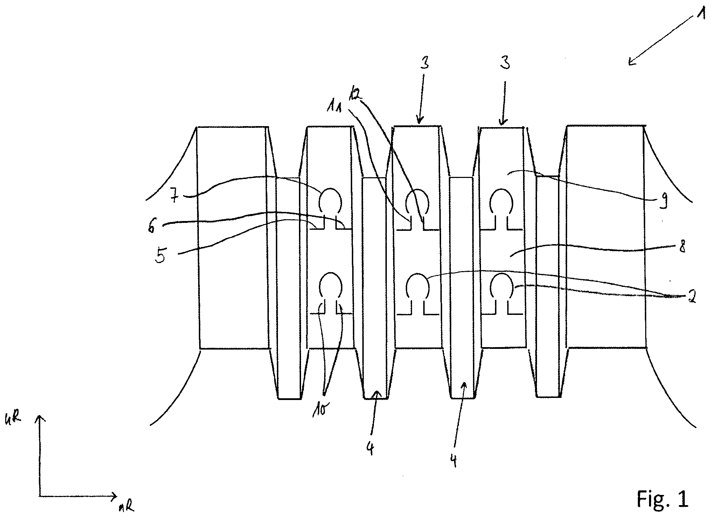

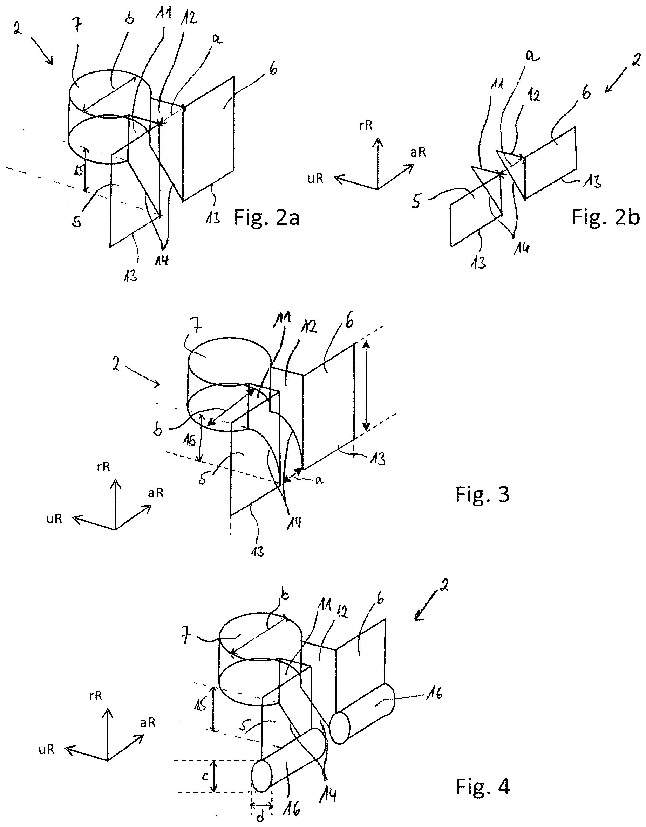

Die **Fig. 1** zeigt eine dreidimensionale Ansicht eines Laufstreifenprofils 1 eines Fahrzeugreifens mit Feineinschnitten 2 in den Profilbändern 3. Jedes Profilband 3 ist beidseitig von Umfangsrillen 4 begrenzt. Der Feineinschnitt 2 durchquert das Profilband 3 in axialer Richtung aR vollständig. Der Feineinschnitt 2 weist - in Aufsicht - eine etwa Ωförmige Geometrie aus zwei in etwa in axialer Richtung aR auf einer gemeinsamen gedachten Geraden angeordneten, mit einem Abstand a voneinander beabstandeten axialen Abschnitten 5, 6 und einer zwischen diesen Abschnitten 5, 6 angeordneten, in etwa in Umfangsrichtung uR ausgerichteten mittigen Vorwölbung 12 mit einer in axialer Richtung gemessenen maximalen Ausdehnung b auf. Die Vorwölbung 12 ist in Umfangsrichtung uR beabstandet von den axialen Abschnitten5, 6 angeordnet. Die Vorwölbung 12 ist mit den mittigen Enden der axialen Abschnitte 5, 6 durch in etwa in Umfangsrichtung uR angeordnete Umfangsabschnitte 11, 12 miteinander verbunden. Die Vorwölbung 12 greift in eine korrespondierende Ausnehmung des angrenzenden Profilbandabschnittes 13 ein. Hierbei ist a > b, so dass Hinterschneidungen 15 gebildet sind, durch welche diese zwei Profilbandabschnitte 13, 14 in Umfangsrichtung uR miteinander gekoppelt sind und interlocking-Effekte aufweisen. Der Feineinschnitt 2 ist im Neuzustand des Laufstreifenprofils ein in axialer Richtung aR durchgängig ausgebildeter Feineinschnitt 2 ohne Durchbrechungen oder Unterbrechungen.
Der Feineinschnitt 2 weist ab einer Resttiefe des Feineinschnittes, welche im Bereich einer Tiefe von 3 mm bis 0,4 x der Feineinschnitttiefe beginnt, eine veränderte Geometrie auf, indem die Hinterschneidungen 15 ausbildende Vorwölbung 12 nur bis zu dieser Resttiefe ausgebildet ist, siehe Fig. 2, 3, 4.

Die **Fig. 2** zeigt eine dreidimensionale Darstellung eines Feineinschnittes 2 des Laufstreifenprofils (Fig. 2a) und diesen Feineinschnitt 2 im Zustand bei erreichter Resttiefe mit veränderter Geometrie (Fig. 2b). Der Feineinschnitt 2 hat im Neuzustand die in Fig. 1 beschriebene Geometrie. Ab einer Resttiefe des Feineinschnittes, welche im Bereich einer Tiefe von 3 mm bis 0,4 x der Feineinschnitttiefe beginnt, weist der Feineinschnitt 2 eine veränderte Geometrie auf. Die Vorwölbung 7 ist nur bis zu dieser Resttiefe ausgebildet und ab Erreichen dieser Resttiefe nicht mehr. Ab Erreichen dieser Resttiefe sind lediglich die beiden axial ausgerichteten Abschnitte 5, 6 bis zum ihrem Grund 13 mit gleichbleibender Geometrie ausgebildet, während die beiden Umfangsabschnitte 11, 12 über den weiteren Tiefenverlauf kürzer werden, bis sie am Grund 13 an den axialen Abschnitten 5, 6 enden. Dieser Tiefenverlauf der Umfangsabschnitt 11, 12 ist derart ausgebildet, dass der Grund 14 dieser Umfangsabschnitte von der Vorwölbung 17 auf Höhe der Resttiefe beginnend bis zum Grund 13 der axialen Abschnitte verläuft und als Gerade ausgebildet ist.

Die **Fig. 3** zeigt eine dreidimensionale Darstellung eines weiteren Feineinschnittes 2. Dieser weitere Feineinschnitt 2 unterscheidet sich dahingehend von dem Feineinschnitt 2 der Fig. 2, dass der Grund 14 der Umfangsabschnitte konvex ausgebildet ist und die konvexe Ausbildung nach radial oben weist.

Die **Fig. 4** zeigt eine dreidimensionale Darstellung eines wiederum weiteren Feineinschnittes 2. Dieser Feineinschnitt 2 weist die Geometrie des Feineinschnittes 2 der Fig. 2 auf, unterscheidet sich aber dahingehend, dass die axialen Abschnitte 5, 6 an ihrem radial inneren Ende einen im Querschnitt des Feineinschnittes 2 runden oder ovalen Hohlraum 16 aufweisen und in diesem enden. Der Hohlraum weist -weiterhin im Querschnitt des Feineinschnittes betrachtet, eine in radialer Richtung des Laufstreifenprofils gemessene Höhe c von 0,5 bis 4,0mm und eine in Umfangsrichtung des Laufstreifenprofils gemessene Breite d von 0,5 bis 4,0mm auf.

### Bezugszeichenliste

### (Teil der Beschreibung)

- 1: Laufstreifenprofil
- 2: Feineinschnitt
- 3: Profilband
- 4: Umfangsrille
- 5: axialer Abschnitt
- 6: axialer Abschnitt
- 7: Vorwölbung
- 8: Profilbandabschnitt
- 9: Profilbandabschnitt
- 10: Hinterschneidung
- 11: Umfangsabschnitt
- 12: Umfangsabschnitt
- 13: Grund des axialen Abschnittes
- 14: Grund des Umfangsabschnittes
- 15: Resttiefe
- 16: Hohlraum

- a: axialer Abstand zwischen den Abschnitten
- b: maximale Ausdehnung der Vorwölbung in axialer Richtung
- c: Höhe des Hohlraumes
- d: Breite des Hohlraumes
- rR: radiale Richtung
- aR: axiale Richtung
- uR: Umfangsrichtung

## Patentansprüche

1. Laufstreifenprofil (1) eines Fahrzeugreifens, welches ein über den Umfang des Laufstreifens umlaufendes Profilband (3) mit Feineinschnitten (2) aufweist, welche das Profilband (3) in Profilbandabschnitte (8, 9) unterteilt und wobei der Feineinschnitt (2) - in Aufsicht - eine etwa Ω-förmige Geometrie aus zwei in etwa in axialer Richtung angeordneten, mit einem Abstand a voneinander beabstandeten axialen Abschnitten (5, 6) und einer zwischen diesen Abschnitten (5, 6) angeordneten, in etwa in Umfangsrichtung ausgerichteten mittigen Vorwölbung (7) mit einer in axialer Richtung gemessenen maximalen Ausdehnung b aufweist, wobei die Vorwölbung (7) in eine korrespondierende Ausnehmung des angrenzenden Profilbandabschnittes (8, 9) eingreift, wobei a < b ist, so dass Hinterschneidungen (10) gebildet sind, durch welche diese zwei Profilbandabschnitte (8, 9) in Umfangsrichtung miteinander gekoppelt sind und wobei der Feineinschnitt (2) ab einer Resttiefe (15) des Feineinschnittes von 3mm bis 0,4 x der Feineinschnitttiefe eine veränderte Geometrie aufweist, indem die Hinterschneidungen (10) ausbildende Vorwölbung (7) nur bis zu dieser Resttiefe (15) ausgebildet ist, **dadurch gekennzeichnet, dass** - in Aufsicht - die Vorwölbung (7) in Umfangsrichtung uR beabstandet von den axialen Abschnitten (5, 6) angeordnet ist und dass die Vorwölbung (7) mit den mittigen Enden der axialen Abschnitte durch in etwa in Umfangsrichtung uR angeordnete Umfangsabschnitte (11, 12) miteinander verbunden ist.

2. Laufstreifenprofil nach Anspruch 1, **dadurch gekennzeichnet, dass** die Umfangsabschnitte (11, 12) -in Aufsicht- als Geraden ausgebildet sind.

3. Laufstreifenprofil nach Anspruch 1 oder 2, **dadurch gekennzeichnet, dass** der Tiefenverlauf der Umfangsabschnitt (11, 12) derart ausgebildet ist, dass der Grund (14) dieser Umfangsabschnitte (11, 12) von der Vorwölbung (17) auf Höhe der Resttiefe (15) beginnend bis zum Feineinschnittgrund (13) der axialen Abschnitte (5, 6) verläuft und als Gerade ausgebildet ist.

4. Laufstreifenprofil nach Anspruch 1 oder 2, **dadurch gekennzeichnet, dass** der Tiefenverlauf der Umfangsabschnitt (11, 12) derart ausgebildet ist, dass der Grund (14) dieser Umfangsabschnitte (11, 12) von der Vorwölbung (17) auf Höhe der Resttiefe (15) beginnend bis zum Feineinschnittgrund (13) der axialen Abschnitte (5, 6) verläuft und konvex ausgebildet ist, wobei die konvexe Wölbung vorzugsweise nach radial außen weist.

5. Laufstreifenprofil nach einem oder mehreren der vorangehenden Ansprüche, **dadurch gekennzeichnet, dass** die axialen Abschnitte (5, 6) an ihrem radial inneren Ende einen im Querschnitt des Feineinschnittes (2) runden oder ovalen Hohlraum (16) aufweisen und in diesem enden.

6. Fahrzeugluftreifen, **dadurch gekennzeichnet, dass** dieser ein Laufstreifenprofil (1) gemäß einer oder mehrerer der vorangehenden Ansprüche aufweist.

7. Fahrzeugluftreifen nach Anspruch 6, **dadurch gekennzeichnet dass** dieser ein Nutzfahrzeugluftreifen ist.

## Claims

1. Tread profile (1) of a vehicle tire, which tread profile has a profile band (3) which runs in encircling fashion over the circumference of the tread and which has sipes (2) which divides the profile band (3) into profile band sections (8, 9) and wherein the sipe (2) has - in plan view - an approximately Ω-shape geometry composed of two axial sections (5 6), which are arranged approximately in an axial direction and which are spaced apart from one another by a spacing a, and of a central bulge (7) which is oriented approximately in a circumferential direction and which has a maximum extent b measured in the axial direction, wherein the bulge (7) engages into a corresponding recess of the adjacent profile band section (8, 9), wherein a < b, such that undercuts (10) are formed by way of which said two profile band sections (8, 9) are coupled to one another in the circumferential direction, and wherein the sipe (2), proceeding from a residual depth (15) of the sipe of 3 mm to 0.4 x the sipe depth, has a changed geometry by virtue of the bulge (7) which forms undercuts (10) being formed only as far as said residual depth (15), **characterized in that** - in plan view - the bulge (7) is arranged spaced apart in the circumferential direction uR from the axial sections (5, 6), and **in that** the bulge (7) is connected to the central ends of the axial sections by circumferential sections (11, 12) arranged approximately in the circumferential direction uR.

2. Tread profile according to Claim 1, **characterized in that** the circumferential sections (11, 12) - as seen in plan view - are in the form of straight lines.

3. Tread profile according to Claim 1 or 2, **characterized in that** the depth profile of the circumferential section (11, 12) is configured such that the base (14) of said circumferential sections (11, 12) runs proceeding from the bulge (17) at the level of the residual depth (15) as far as the sipe base (13) of the axial sections (5, 6) and is in the form of a straight line.

4. Tread profile according to Claim 1 or 2, **characterized in that** the depth profile of the circumferential section (11, 12) is configured such that the base (14) of said circumferential sections (11, 12) runs proceeding from the bulge (17) at the level of the residual depth (15) as far as the sipe base (13) of the axial sections (5, 6) and is of convex form, wherein the convex curvature preferably points radially outward.

5. Tread profile according to one or more of the preceding claims, **characterized in that** the axial sections (5, 6) have, at their radially inner end, a cavity (16) which is circular or oval in the cross section of the sipe (2), and said axial sections end in said cavity.

6. Pneumatic vehicle tire, **characterized in that** it has a tread profile (1) according to one or more of the preceding claims.

7. Pneumatic vehicle tire according to Claim 6, **characterized in that** it is a pneumatic utility vehicle tire.

## Revendications

1. Profil de bande de roulement (1) d'un pneumatique de véhicule, qui présente une bande profilée (3) avec de fines entailles (2) qui entoure la périphérie de la bande de roulement, qui divise la bande profilée (3) en portions de bande profilée (8, 9) et dans lequel la fine entaille (2) - en vue de dessus - présente une géométrie approximativement en forme de Ω, constituée de deux portions axiales (5, 6) disposées approximativement dans la direction axiale, espacées l'une de l'autre d'une distance a, et d'un précintrage central (7), disposé entre ces portions (5, 6), orienté approximativement dans la direction périphérique, avec une étendue maximale b mesurée dans la direction axiale, le précintrage (7) venant en prise dans un évidement correspondant de la portion de bande profilée adjacente (8, 9), où a < b, de telle sorte que des contre-dépouilles (10) soient formées, par lesquelles ces deux portions de bande profilée (8, 9) sont accouplées l'une à l'autre dans la direction périphérique et dans lequel la fine entaille (2), à partir d'une profondeur restante (15) de la fine entaille de 3 mm à 0,4 x la profondeur de la fine entaille, présente une géométrie modifiée, en ce que le précintrage (7) constituant les contre-dépouilles (10) n'est réalisé que jusqu'à cette profondeur restante (15), **caractérisé en ce que** - en vue de dessus - le précintrage (7) est disposé dans la direction périphérique uR à distance des portions axiales (5, 6) et **en ce que** le précintrage (7) est connecté aux extrémités centrales des portions axiales par des portions périphériques (11, 12) disposées approximativement dans la direction périphérique uR.

2. Profil de bande de roulement selon la revendication 1, **caractérisé en ce que** les portions périphériques (11, 12), en vue de dessus, sont réalisées sous forme de droites.

3. Profil de bande de roulement selon la revendication 1 ou 2, **caractérisé en ce que** l'allure en profondeur de la portion périphérique (11, 12) est réalisée de telle sorte que le fond (14) de ces portions périphériques (11 ,12) s'étende depuis le précintrage (17) en commençant à la hauteur de la profondeur restante (15) jusqu'au fond de la fine entaille (13) des portions axiales (5, 6) et soit réalisé sous forme de droite.

4. Profil de bande de roulement selon la revendication 1 ou 2, **caractérisé en ce que** l'allure en profondeur de la portion périphérique (11, 12) est réalisée de telle sorte que la base (14) de ces portions périphériques (11, 12) s'étende depuis le précintrage (17) en commençant à la hauteur de la profondeur restante (15) jusqu'au fond de la fine entaille (13) des portions axiales (5, 6) et soit réalisée sous forme convexe, la courbure convexe étant de préférence orientée radialement vers l'extérieur.

5. Profil de bande de roulement selon l'une quelconque ou plusieurs des revendications précédentes, **caractérisé en ce que** les portions axiales (5, 6) présentent, au niveau de leur extrémité radialement interne, une cavité (16) ronde ou ovale en section transversale de la fine entaille (2), et se terminent dans celle-ci.

6. Pneumatique de véhicule, **caractérisé en ce qu'**il présente un profil de bande de roulement (1) selon une ou plusieurs des revendications précédentes.

7. Pneumatique de véhicule selon la revendication 6, **caractérisé en ce qu'**il est un pneumatique de véhicule utilitaire.
